# EUROPEAN PATENT APPLICATION

(11) **EP 4 691 588 A1**
(43) Date of publication of application: **11.02.2026**
(21) Application number: 24795863.0
(22) Date of filing: 12.04.2024
(51) Int. Cl.: A63H 33/08

(54) **JOINT BUILDING BLOCK ASSEMBLY AND TOY**

(30) Priority: 25.04.2023 CN 202310459301
(71) Applicant: Shanghai Bloks Technology Group Co., Ltd., Shanghai 201822 (CN); Shanghai Bloks Technology Co., Ltd, Shanghai 201103 (CN)
(72) Inventor: XIAO, Ye, Shanghai 201103 (CN); DENG, Shanjun, Shanghai 201103 (CN); XIAO, Ruyi, Shanghai 201103 (CN); ZHAO, Jialiang, Shanghai 201103 (CN)
(74) Representative: Bayramoglu et al.
(86) International application number: PCT/CN2024/087446
(87) International publication number: WO 2024/222482

(57) **Abstract**

A joint building block assembly, including: a building block body (1), where two sides of the building block body are each provided with a first connection structure (11); an intermediate building block (2), provided with a second connection structure (21), assembled to the first connection structure (11) via the second connection structure, and rotatable relative to the building block body (1); and a limb building block (3), provided with a third connection structure (31) and assembled outside the intermediate building block (2) via the third connection structure, where when the limb building block (3) moves left or right relative to the building block body (1) to switch between an upright state and a split state, the intermediate building block (2) moves between a first position and a second position relative to the first connection structure (11) under a compressive force from the limb building block (3). A toy including the joint building block assembly can achieve both forward/backward leg swinging and left/right leg splitting movements.

## Description

### TECHNICAL FIELD

The present disclosure relates to the technical field of toys, and in particular to a joint building block assembly and a toy.

### BACKGROUND TECHNOLOGY

Building block toys are widely popular among children and parents due to their entertainment and educational benefits. Many realistic toy models available today can faithfully replicate human body movements. This is particularly true for building block toys developed in recent years, which, once assembled, possess articulated joints capable of performing a variety of physical motions, such as those mimicking human and animal actions and postures.

In existing joint building block toys, the assembled building block toys can achieve forward/backward swinging of the lower limbs or leg spreading movements within a limited range. However, very few leg joint assemblies can achieve both forward/backward leg swinging and left/right leg splitting movements, which significantly diminishes the play value.

### CONTENT OF THE INVENTION

In view of the defects in the prior art, an objective of the present disclosure is to provide a joint building block assembly and a toy.

The joint building block assembly provided by the present disclosure includes:
a building block body, where two sides of the building block body are each provided with a first connection structure;
an intermediate building block, provided with a second connection structure, assembled to the first connection structure via the second connection structure, and rotatable relative to the building block body; and
a limb building block, provided with a third connection structure and assembled outside the intermediate building block via the third connection structure, where when the limb building block moves left or right relative to the building block body to switch between an upright state and a split state, the intermediate building block moves between a first position and a second position relative to the first connection structure under a compressive force from the limb building block; and when the limb building block moves forward or backward relative to the building block body to switch between the upright state and a leg lift state, the limb building block rotates relative to the intermediate building block and/or the intermediate building block rotates relative to the building block body.

Preferably, the first connection structure is a post extending from a bottom end of the building block body; the post is provided with a first groove, a second groove, and a third groove arranged sequentially at intervals from a tail end to a root; and the second connection structure is a connection hole; and an inner wall of the connection hole is provided with a first boss and a second boss arranged at intervals; and
when the intermediate building block is in the first position, the first boss is located inside the first groove; and when the intermediate building block is in the second position, the second boss is located inside the second groove.
the first connection structure is a first ball head structure extending from the bottom end of the building block body; the first ball head structure is provided with a second groove and a third groove arranged sequentially at intervals from the tail end to the root; the second connection structure is a first ball socket structure; an inner wall of the first ball socket structure is provided with a first boss and a second boss arranged at intervals; when the intermediate building block is in the first position, the second boss is located inside the second groove; and when the intermediate building block is in the second position, the first boss is located inside the second groove;

Preferably, the first boss is an annular boss or a portion of an annular boss; and the second boss is an annular boss or a portion of an annular boss.

Preferably, the second groove communicates with the third groove; and a depth of the third groove is greater than a depth of the second groove.

Preferably, an outer portion of the intermediate building block is configured as a second ball head structure; and the third connection structure is a second ball socket structure matching the second ball head structure.

Preferably, one side of the second ball socket structure is provided with an arc-shaped concave edge; and when the intermediate building block is in the second position, the arc-shaped concave edge contacts and abuts against a bottom of the third groove.

Preferably, the limb building block rotates 90° to switch from the upright state to the leg lift state.

Preferably, the building block body is provided with an intermediate segment; and when the limb building block is in the leg lift state, an upward rotation trend of the limb building block is limited by the intermediate segment.

Preferably, an outer surface of an end of the limb building block close to the intermediate building block is a smoothly transitioning convex surface.

Preferably, an inner diameter of an opening of the second ball socket structure is smaller than an outer diameter of the second ball head structure; and the second ball head structure is able to pass through the opening under a manual force.

Preferably, a maximum outer diameter of the post is greater than a minimum inner diameter of the connection hole, and the connection hole is elastically enlarged under a manual force, allowing the post to pass through the connection hole.

Preferably, the limb building block experiences sliding damping when switching between the upright state and the split state; and the sliding damping is generated between the limb building block and the intermediate building block and/or between the limb building block and the building block body.

Preferably, the building block body is further provided with at least one fourth connection structure, and the limb building block is further provided with at least one fifth connection structure; and the fourth connection structure and the fifth connection structure each are configured to be connected to another building block.

Preferably, the fourth connection structure is a male connection structure or a female connection structure; and the fifth connection structure is a male connection structure or a female connection structure.

The toy provided by the present disclosure includes the joint building block assembly. Compared with the prior art, the present disclosure has the following beneficial effects:
1. The joint building block assembly of the present disclosure features good tactile feedback, convenient assembly and disassembly, high stability, a compact structure, and reduces the number of building blocks. The present disclosure can achieve forward/backward leg swinging and left/right leg splitting movements. The present disclosure can also achieve leg lifting movements, splitting movements, and any intermediate movement process between the leg lifting movement, the splitting movement, and the upright state. Therefore, the present disclosure greatly enhances the entertainment value and premium quality of the toy.
2. In the present disclosure, the intermediate building block is obscured by the limb building block, allowing only the smoothly transitioning outer surface of the limb building block to be seen when viewed externally. Meanwhile, the intermediate building block in the present disclosure adopts a spherical appearance, causing the building block body to be obscured by the spherical building block during large-amplitude movements like splits, thereby enhancing the aesthetic appeal of the toy.

### DESCRIPTION OF THE DRAWINGS

Other features, objectives, and advantages of the present disclosure will become more apparent by reading the detailed description of non-limiting embodiments with reference to the following drawings.
FIG. 1 is an exploded view of a joint building block assembly;
FIG. 2 is a front exploded view of the joint building block assembly;
FIG. 3 is a cross-sectional view of the joint building block assembly shown in FIG. 2;
FIG. 4 is a cross-sectional view when a limb building block is in an upright state;
FIG. 5 is a cross-sectional view of the limb building block in a state between the upright state and a split state;
FIG. 6 is a cross-sectional view of the limb building block in another state between the upright state and the split state;
FIG. 7 is a cross-sectional view when the limb building block is in the split state;
FIG. 8 is a front view of the limb building block in a state between the upright state and a leg lift state;
FIG. 9 is a side view of the limb building block in a state between the upright state and the leg lift state;
FIG. 10 is a front view when the limb building block is in the leg lift state;
FIG. 11 is a side view when the limb building block is in the leg lift state;
FIG. 12 is a front view of the limb building block in a state between the upright state and the split state;
FIG. 13 is a structural view of the limb building block in another state between the upright state and the split state when viewed from one direction;
FIG. 14 is a structural view of the limb building block in the split state when viewed from one direction;
FIG. 15 is a structural view when a first connection structure is a first ball head structure and an intermediate building block is located at a second position; and
FIG. 16 is a structural view when the first connection structure is the first ball head structure and the intermediate building block is located at a first position.

Reference Numerals:
1. building block body;
11. first connection structure;
111. first groove;
112. second groove;
113. third groove;
12. fourth connection structure;
13. intermediate segment;
2. intermediate building block;
21. second connection structure;
211. first boss;
212. second boss;
3. limb building block;
31. third connection structure;
311. arc-shaped concave edge; and
32. fifth connection structure.

### SPECIFIC IMPLEMENTATIONS

The present disclosure is described in detail below with reference to the specific embodiments. The following embodiments will help those skilled in the art to further understand the present disclosure, without limiting the present disclosure in any way. It should be noted that several variations and improvements can also be made by a person of ordinary skill in the art without departing from the conception of the present disclosure. These all fall within the protection scope of the present disclosure.

### Embodiment 1:

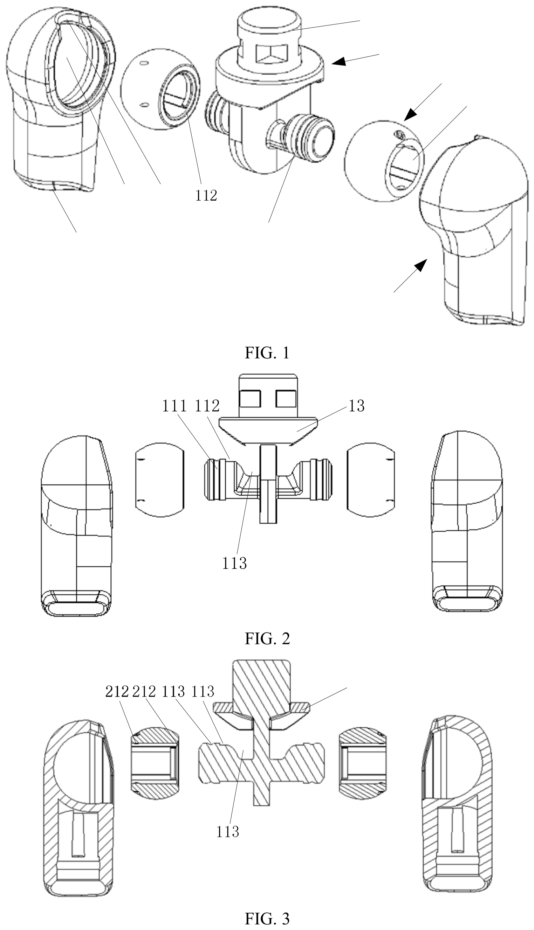

The present disclosure provides a joint building block assembly. As shown in FIG. 1, FIG. 2, and FIG. 3, the joint building block assembly includes building block body 1, intermediate building block 2, and limb building block 3. Two sides of the building block body 1 are each provided with first connection structure 11. The intermediate building block 2 is provided with second connection structure 21. The second connection structure 21 matches the first connection structure 11. Therefore, the intermediate building block 2 can be assembled to the first connection structure 11 via the second connection structure 21, such that the intermediate building block 2 and the building block body 1 are assembled together. After assembly, the intermediate building block 2 is rotatable relative to the building block body 1. Preferably, the first connection structure 11 is a post extending from two sides of a bottom end of the building block body 1, respectively. The post is provided with first groove 111, second groove 112, and third groove 113 arranged sequentially at intervals from a tail end to a root. Preferably, the second connection structure 21 is a connection hole. An inner wall of the connection hole is provided with first boss 211 and second boss 212 arranged at intervals. The first boss 211 is an annular boss or a portion of an annular boss. The second boss 212 is an annular boss or a portion of an annular boss.

It should be noted that the second connection structure 21 assembled to the first connection structure 11 is slidable along an axial direction of the first connection structure 11 under an external force, enabling the second connection structure 21 to slide between a first position and a second position. When the second connection structure 21 is in the first position, the first boss 211 is located inside the first groove 111. When the second connection structure 21 is in the second position, the second boss 212 is located inside the second groove 112.

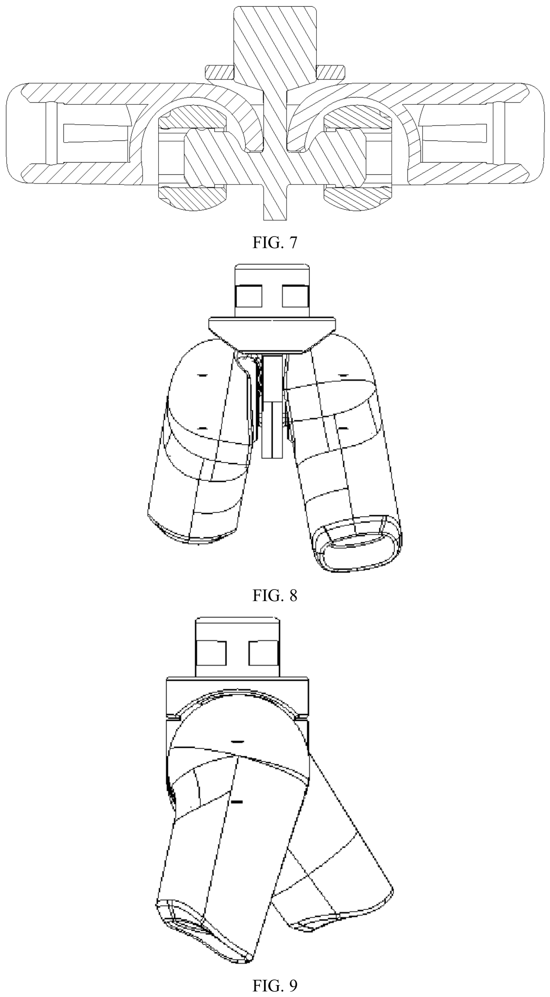

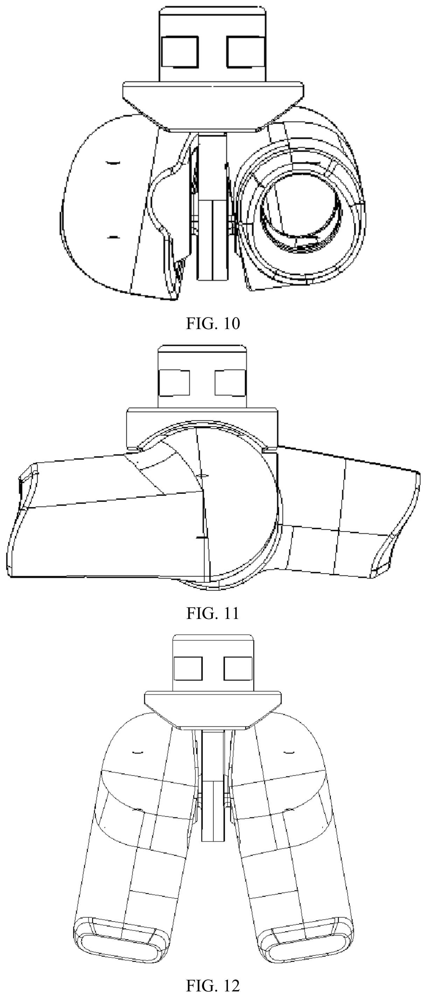

Furthermore, the limb building block 3 can be assembled outside the intermediate building block 2 via third connection structure 31. When the limb building block 3 swings left or right relative to the building block body 1, causing the limb building block 3 to switch between an upright state and a split state, the intermediate building block 2 is movable between the first position and the second position relative to the first connection structure 11 under a compressive force from the limb building block 3. When the limb building block 3 switches between the upright state and a leg lift state by moving forward or backward relative to the building block body 1, the limb building block 3 rotates relative to the intermediate building block 2 and/or the intermediate building block 2 rotates relative to the building block body 1. Therefore, the present disclosure can achieve large-angle leg swinging actions forward and backward, such as a leg swing reaching 90°, as shown in FIG. 11, and achieve left/right splitting actions, as shown in FIG. 7.

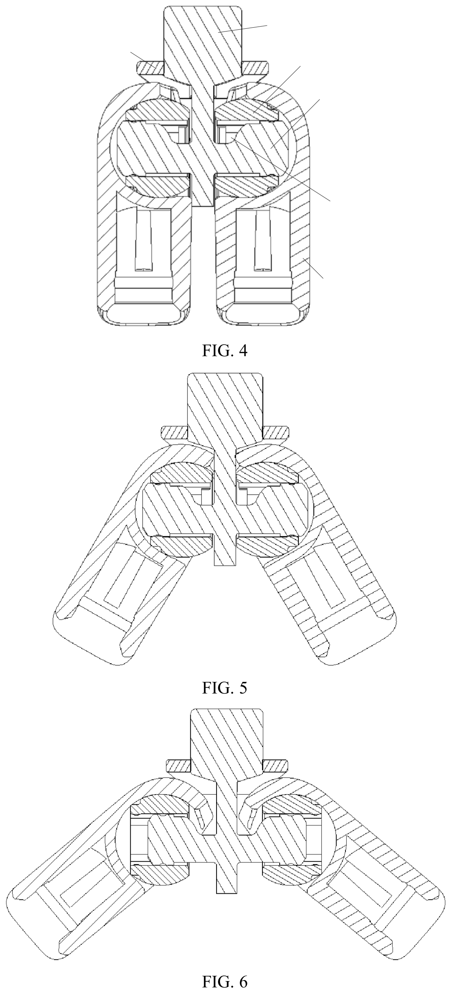

Specifically, preferably, an outer portion of the intermediate building block 2 is configured as a second ball head structure. The third connection structure 31 is a second ball socket structure matching the second ball head structure. One side of the second ball socket structure is provided with arc-shaped concave edge 311. When the intermediate building block 2 is in the first position, as shown in FIG. 4, the first boss 211 is located inside the first groove 111, and in a natural state, the first groove 111 limits the axial movement of the first boss 211. When the intermediate building block 2 is in the second position, as shown in FIG. 7, the second boss 212 is located inside the second groove 112, and the arc-shaped concave edge 311 contacts and abuts against a bottom of the third groove 113. When the arc-shaped concave edge 311 enters the third groove 113, a surface of the arc-shaped concave edge 311 extends beyond two sides of the bottom of the third groove 113. At this time, the limb building block 3 is in the split state.

As shown in FIG. 2, the second groove 112 communicates with the third groove 113 and a depth of the third groove 113 is greater than a depth of the second groove 112. When the limb building block 3 moves from the upright state to the split state, the arc-shaped concave edge 311 gradually enters the third groove 113 until it contacts and abuts against the bottom of the third groove 113. At this time, the shape of the arc-shaped concave edge 311 matches and engages with the shape of the third groove 113. Meanwhile, an inner wall of the second ball socket structure presses against an outer wall of the intermediate building block 2, causing the intermediate building block 2 to move from the first position to the second position. During this process, under the compressive force from the limb building block 3, the first boss 211 located inside the first groove 111 disengages from the first groove 111 and moves away from the post until the arc-shaped concave edge 311 contacts and abuts against the bottom of the third groove 113, and the second boss 212 slides into the second groove 112.

It should be noted that an inner diameter of an opening of the second ball socket structure is smaller than an outer diameter of the second ball head structure, and the second ball head structure can pass through the opening under a manual force. Thus, the entry of the second ball head structure into the second ball socket structure and its exit from the second ball socket structure require manual insertion and extraction forces. Therefore, the intermediate building block 2 and the limb building block 3 assembled together can remain stable in a natural state, enhancing the stability of the building block toy.

A maximum outer diameter of the post is greater than a minimum inner diameter of the connection hole, and the connection hole is elastically enlarged under a manual force, allowing the post to pass through the connection hole. Thus, the entry of the post into the connection hole and its exit from the connection hole require manual insertion and extraction forces. Therefore, the intermediate building block 2 and the building block body 1 assembled together can remain stable in a natural state, enhancing the stability of the building block toy.

The limb building block 3 experiences sliding damping when switching between the upright state and the split state. The sliding damping is generated between the limb building block 3 and the intermediate building block 2 and/or between the limb building block 3 and the building block body 1. The feel of damping experienced during assembly or deformation improves the tactile feedback for children during play, thereby enhancing the premium quality of the toy.

As shown in FIG. 1, when viewed from outside the limb building block 3, the limb building block 3 obscures the intermediate building block 2. Furthermore, the outer surface of the end of the limb building block 3 close to the intermediate building block 2 is a smoothly transitioning convex surface. Therefore, when the toy is viewed externally, only the smoothly transitioning outer surface is visible, increasing the aesthetic appeal of the toy.

The building block body 1 is further provided with at least one fourth connection structure 12, and the limb building block 3 is further provided with at least one fifth connection structure 32. The fourth connection structure 12 and the fifth connection structure 32 each are configured to be connected to another building block. For example, the fourth connection structure 12 is configured to be connected to a torso of a figure toy, and the fifth connection structure 32 is configured to be connected to a lower leg or foot of the figure toy. The fourth connection structure 12 can be a male connection structure or a female connection structure. The fifth connection structure 32 can be a male connection structure or a female connection structure.

The present disclosure further provides a toy, including the joint building block assembly. For example, the toy is a building block figure toy, using the joint building block assembly for assembling a hip joint of the building block figure.

### Embodiment 2:

This embodiment is a variant of Embodiment 1.

This embodiment provides a joint building block assembly, including the building block body 1, the intermediate building block 2, and the limb building block 3. The limb building block 3 is designed as an upper limb of a figure toy, and the building block body 1 is designed as a neck of the figure toy. The fourth connection structure 12 is configured to be connected to a head of the figure toy, and the fifth connection structure 32 is configured to be connected to an arm of the figure toy. When the limb building block 3 moves left or right relative to the building block body 1, the limb building block 3 can switch between the upright state and an arm extension state. When switching from the upright state to the arm extension state, under the compressive force of the limb building block 3, the intermediate building block 2 moves from the first position to the second position relative to the first connection structure 11. When the limb building block 3 moves forward or backward relative to the building block body 1, it can switch between the upright state and an arm lift state. When switching between the upright state and the arm lift state, the limb building block 3 is rotatable relative to the intermediate building block 2, and/or the intermediate building block 2 is rotatable relative to the building block body 1.

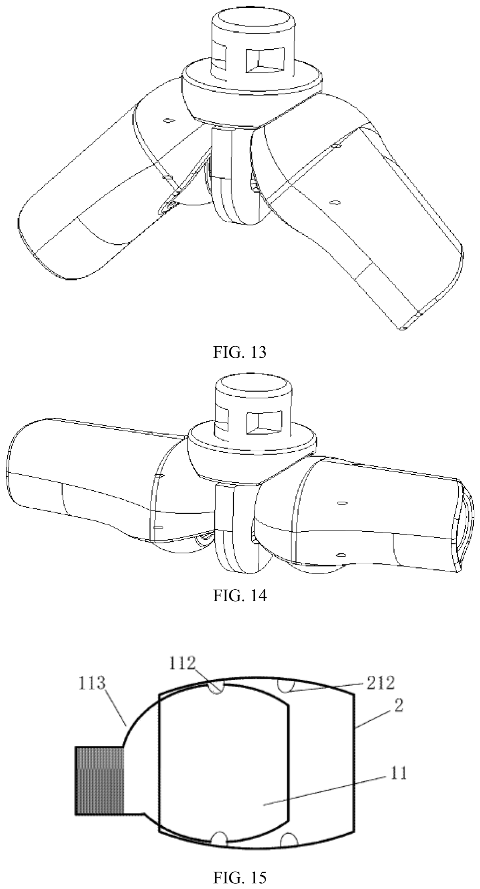

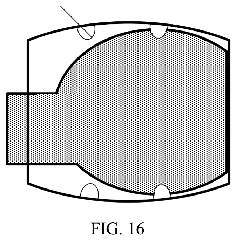

In this embodiment, the first connection structure 11 is a first ball head structure extending from the bottom end of the building block body 1. The first ball head structure is provided with second groove 112 and third groove 113 arranged sequentially at intervals from the tail end to the root. As shown in FIG. 15 and FIG. 16, the second connection structure 21 is a first ball socket structure. An inner wall of the first ball socket structure is provided with first boss 211 and second boss 212 arranged at intervals. When the intermediate building block 2 is in the first position, the second boss 212 is located inside the second groove 112. When the intermediate building block 2 is in the second position, the first boss 211 is located inside the second groove 112. The first connection structure 11 and the second connection structure 21 are designed as the ball head structure and the ball socket structure matching with each other, which can achieve the effects of the present disclosure.

### Taking Embodiment 1 as an example, the operating principle of the present disclosure is as follows:

When the intermediate building block 2 is in the first position, as shown in FIG. 4, the first boss 211 is located inside the first groove 111, and in a natural state, the first groove 111 limits the axial movement of the first boss 211. The limb building block 3 is in the upright state. When left limb building block 3 gradually spreads its leg to the left from the upright state and right limb building block 3 gradually spreads its leg to the right from the upright state, the inner surface of the second ball socket structure slides and rotates relative to the outer surface of the second ball head structure. When the end of the second ball socket structure abuts against the outer surface of the building block body 1, as shown in FIG. 5 and FIG. 12, the inner surface of the second ball socket structure continues to slide and rotate relative to the outer surface of the second ball head structure. At this time, the inner surface of the second ball socket structure presses against the outer surface of the second ball head structure, driving the intermediate building block 2 to slide towards one side of the outer end surface of the post, and the first boss 211 disengages from the first groove 111, as shown in FIG. 6 and FIG. 13. The intermediate building block 2 slides towards one side of the outer end surface of the post until the arc-shaped concave edge 311 contacts and abuts against the bottom of the third groove 113, as shown in FIG. 7 and FIG. 14. At this time, the second boss 212 is located inside the second groove 112, and the limb building block 3 is in the split state.

When the limb building block 3 in the upright state performs a leg lifting action forward relative to the building block body 1, as shown in FIG. 8 and FIG. 9, the limb building block 3 rotates relative to the intermediate building block 2 and/or the intermediate building block 2 rotates relative to the building block body 1, until the leg swing reaches 90°, as shown in FIG. 10 and FIG. 11. At this time, a side of the limb building block 3 is limited by intermediate segment 13 of the building block body 1.

In the description of the present disclosure, it needs to be understood that the orientation or positional relationships indicated by terms, such as "up", "down", "front", "rear", "left", "right", "vertical", "horizontal", "top", "bottom", "inside", and "outside", are based on the orientation or positional relationship shown in the accompanying drawings, are merely for facilitating the description of the present application and simplifying the description, rather than indicating or implying that an apparatus or element referred to must have a particular orientation or be constructed and operated in a particular orientation, and therefore shall not be interpreted as limiting the present application.

The specific embodiments of the present disclosure are described above. It should be understood that the present disclosure is not limited to the above specific implementations, and a person skilled in the art can make various variations or modifications within the scope of the claims without affecting the essence of the present disclosure. The embodiments of the present disclosure and features in the embodiments may be arbitrarily combined with each other in a non-conflicting situation.

## Claims

1. A joint building block assembly, comprising:
a building block body (1), wherein two sides of the building block body are each provided with a first connection structure (11);
an intermediate building block (2), provided with a second connection structure (21), assembled to the first connection structure (11) via the second connection structure, and rotatable relative to the building block body (1); and
a limb building block (3), provided with a third connection structure (31) and assembled outside the intermediate building block (2) via the third connection structure, wherein when the limb building block (3) moves left or right relative to the building block body (1) to switch between an upright state and a split state, the intermediate building block (2) moves between a first position and a second position relative to the first connection structure (11) under a compressive force from the limb building block (3); and when the limb building block (3) moves forward or backward relative to the building block body (1) to switch between the upright state and a leg lift state, the limb building block (3) rotates relative to the intermediate building block (2) and/or the intermediate building block (2) rotates relative to the building block body (1).

2. The joint building block assembly according to claim 1, wherein the first connection structure (11) comprises any one of following structures:
the first connection structure (11) is a post extending from a bottom end of the building block body (1); the post is provided with a first groove (111), a second groove (112), and a third groove (113) arranged sequentially at intervals from a tail end to a root; the second connection structure (21) is a connection hole; an inner wall of the connection hole is provided with a first boss (211) and a second boss (212) arranged at intervals; when the intermediate building block (2) is in the first position, the first boss (211) is located inside the first groove (111); and when the intermediate building block (2) is in the second position, the second boss (212) is located inside the second groove (112);
the first connection structure (11) is a first ball head structure extending from the bottom end of the building block body (1); the first ball head structure is provided with a second groove (112) and a third groove (113) arranged sequentially at intervals from the tail end to the root; the second connection structure (21) is a first ball socket structure; an inner wall of the first ball socket structure is provided with a first boss (211) and a second boss (212) arranged at intervals; when the intermediate building block (2) is in the first position, the second boss (212) is located inside the second groove (112); and when the intermediate building block (2) is in the second position, the first boss (211) is located inside the second groove (112); and
preferably, the first boss (211) is an annular boss or a portion of an annular boss; and the second boss (212) is an annular boss or a portion of an annular boss.

3. The joint building block assembly according to claim 2, wherein the second groove (112) communicates with the third groove (113); and a depth of the third groove (113) is greater than a depth of the second groove (112).

4. The joint building block assembly according to claim 2, wherein an outer portion of the intermediate building block (2) is configured as a second ball head structure; the third connection structure (31) is a second ball socket structure matching the second ball head structure; preferably, one side of the second ball socket structure is provided with an arc-shaped concave edge (311); and when the intermediate building block (2) is in the second position, the arc-shaped concave edge (311) contacts and abuts against a bottom of the third groove (113).

5. The joint building block assembly according to claim 1, wherein the limb building block (3) rotates 90° to switch from the upright state to the leg lift state; preferably, the building block body (1) is provided with an intermediate segment (13); and when the limb building block (3) is in the leg lift state, an upward rotation trend of the limb building block (3) is limited by the intermediate segment (13); and preferably, an outer surface of an end of the limb building block (3) close to the intermediate building block (2) is a smoothly transitioning convex surface.

6. The joint building block assembly according to claim 4, wherein an inner diameter of an opening of the second ball socket structure is smaller than an outer diameter of the second ball head structure; and the second ball head structure is allowed to pass through the opening under a manual force.

7. The joint building block assembly according to claim 2, wherein a maximum outer diameter of the post is greater than a minimum inner diameter of the connection hole, and the connection hole is elastically enlarged under a manual force, allowing the post to pass through the connection hole.

8. The joint building block assembly according to claim 1, wherein the limb building block (3) experiences sliding damping when switching between the upright state and the split state; and the sliding damping is generated between the limb building block (3) and the intermediate building block (2) and/or between the limb building block (3) and the building block body (1).

9. The joint building block assembly according to claim 1, wherein the building block body (1) is further provided with at least one fourth connection structure (12), and the limb building block (3) is further provided with at least one fifth connection structure (32); the fourth connection structure (12) and the fifth connection structure (32) each are configured to be connected to another building block; preferably, the fourth connection structure (12) is a male connection structure or a female connection structure; and the fifth connection structure (32) is a male connection structure or a female connection structure.

10. A toy, comprising the joint building block assembly according to any one of claims 1 to 9.
